Europäisches Patentamt

European Patent Office

Office européen des brevets

(11) Numéro de publication: **0 140 767 B1**

(19)

## (12) FASCICULE DE BREVET EUROPEEN

(45) Date de publication de fascicule du brevet: **13.05.92**

(21) Numéro de dépôt: **84401987.7**

(22) Date de dépôt: **04.10.84**

Le dossier contient des informations techniques présentées postérieurement au dépôt de la demande et ne figurant pas dans le présent fascicule.

(51) Int. Cl.⁵: **A23B  7/153**, A23L 3/00, A23L 1/28, A23B 7/06

---

(54) **Procédé de blanchiment de champignons et autres légumes.**

---

(30) Priorité: **04.10.83 FR 8315805**

(43) Date de publication de la demande: **08.05.85 Bulletin  85/19**

(45) Mention de la délivrance du brevet: **13.05.92 Bulletin  92/20**

(84) Etats contractants désignés: **AT BE CH DE FR GB IT LI LU NL SE**

(56) Documents cités:
EP-A- 0 021 629          FR-A- 2 197 531
FR-A- 2 227 833          FR-A- 2 317 887
FR-A- 2 370 438          FR-A- 2 396 516
FR-A- 2 512 643          FR-A- 2 528 282
US-A- 3 476 078          US-A- 4 331 691

(73) Titulaire: **Spinoglio, Mario
Route de Moissac
F-82400 GOUDOURVILLE(FR)**

(72) Inventeur: **Spinoglio, Mario
Route de Moissac
F-82400 GOUDOURVILLE(FR)**

(74) Mandataire: **Hasenrader, Hubert et al
Cabinet BEAU DE LOMENIE 55, rue d'Amsterdam
F-75008 Paris(FR)**

EP 0 140 767 B1

## Description

La présente invention concerne un procédé amélioré de blanchiment de champignons et autres légumes.

Il est connu que, lors du conditionnement de légumes et notamment de champignons en vue de leur mise en conserve, il est nécessaire d'éliminer les gaz que ceux-ci renferment avant l'imprégnation du légume par des liquides de traitement pour éviter que lesdits gaz ne s'opposent à la pénétration du liquide dans les légumes.

Ainsi le brevet US 4 331 691 concerne un procédé d'infiltration sous vide de produits frais, tels que fruits et légumes qui consiste à mettre sous vide lesdits produits puis à les humidifier par pulvérisation d'un liquide. Les pressions appropriées dans un tel procédé sont de l'ordre de 200 à 300 mmHg, soit environ 260 à 400 mbars.

Le brevet FR 2 197 531 concerne un procédé et une installation pour le traitement de champignons de Paris appertisés qui consiste à soumettre les champignons à un certain vide pendant une durée limitée, puis à les mettre en contact avec un liquide de traitement. Il est précisé qu'en vue du traitement de ces champignons, ceux-ci sont soumis au vide, par exemple de l'ordre de 50 à 60 mmHg, soit environ 66 à 80 mbars, pendant une durée relativement longue de l'ordre de 5 à 10 minutes.

Le brevet FR 2 396 516 concerne un appareillage pour traiter, en continu par le vide, différents produits alimentaires et notamment des champignons, par mise sous vide desdits produits et immersion de ceux-ci dans une solution aqueuse pouvant contenir différents constituants. Aucune indication n'est donnée quant au vide réalisé lors de ce traitement.

Le certificat d'addition FR 2 370 438 a pour objet une installation pour le traitement de champignons de Paris appertisés constituée d'une enceinte métallique en forme de tonneau et divisée en trois compartiments égaux, chaque compartiment devant être parfaitement étanche et suffisamment solide pour supporter un vide ne laissant qu'une pression de 5 mmHg, soit 6,6 mbars.

Le brevet FR 2 512 643 décrit un procédé amélioré de blanchiment de champignons et autres légumes au cours duquel les légumes subissent un refroidissement à la limite de la température de congélation, sont ensuite introduits dans une enceinte dans laquelle on fait un vide poussé de l'ordre de 4 à 5 mmHg, c'est-à-dire de 5,3 à 6,6 mbars, puis traités avec un liquide d'imprégnation.

Or, il a été constaté que la mise sous vide selon les enseignements de l'art antérieur n'était pas suffisant pour obtenir un dégazage complet des légumes car certains gaz restent encore emprisonnés dans la structure des légumes et notamment des champignons.

Selon la présente invention, il a été trouvé qu'un dégazage très poussé pouvait être obtenu :

1) par une mise sous vide d'une durée de l'ordre de la seconde jusqu'à un vide correspondant à l'ébullition de l'eau contenue dans les légumes, suivie

2) d'une mise sous vide poussé de 1 à 6 mbars.

On a de plus trouvé qu'il était important que le liquide d'imprégnation soit dégazé.

Ainsi, la présente invention concerne un procédé de traitement de légumes, notamment de champignons dans lequel on réalise un dégazage par mise sous vide suivi d'une imprégnation par un liquide de traitement qui comprend :

1) une mise sous vide d'une durée de l'ordre de la seconde jusqu'à un vide correspondant à l'ébullition de l'eau contenue dans les légumes, réalisée en mettant en communication l'enceinte dans laquelle les légumes ont été déposés avec un récipient tampon de volume correspondant à environ 10 à 20 fois le volume de ladite enceinte contenant les légumes et dans lequel un vide a été préalablement réalisé,

2) une mise sous un vide poussé de 1 à 6 mbars,

3) une imprégnation des légumes dégazés avec un liquide lui-même soumis à un dégazage préalable.

Les produits alimentaires qui peuvent être traités sont notamment les champignons de Paris, les champignons sylvestres comme les girolles, cèpes ou morilles, les champignons cultivés comme les Pleurotes et Eudelis, ainsi que d'autres légumes comme les asperges, les artichauts, salsifis, carottes, les haricots verts et secs, les petits pois, céleris, endives, différents choux.

Ces produits sont de préférence refroidis à 0-2°C et on évite leur réchauffement au cours des opérations de nettoyage des légumes. Le lavage sera avantageusement effectué avec de l'eau glacée. En outre ce lavage devra être réalisé de manière à réduire au maximum l'absorption de l'eau de lavage, par exemple : par aspersion sous pression après nettoyage à sec sur table vibrante avec ventilation, ce qui a pour but de réduire la durée de lavage.

Selon l'invention, on a trouvé que l'on pouvait agir sur la structure du légume pour augmenter sa porosité et favoriser l'évacuation totale des gaz inclus, ce qui permet de réaliser une imprégnation beaucoup plus en profondeur que dans l'art antérieur, sans inclusion de gaz résiduel gênant.

L'augmentation de la porosité du légume, plus spécialement du champignon est réalisée selon le procédé de l'invention défini ci-dessus. Lorsqu'on opère de la sorte, les canaux du légume subissent apparemment une dilatation qui facilite le dégazage complet dudit légume.

Un avantage de ce procédé par rapport à ce qui a été antérieurement décrit est que la température du légume qui est soumis au dégazage est beaucoup moins importante. Les légumes soumis au dégazage peuvent être à température ordinaire ou avoir été refroidis.

Par mise sous vide selon l'étape 1) du procédé, on entend une mise sous un vide partiel en une durée très courte inférieure à 10 s et de préférence de l'ordre de 1 s. Cette mise sous vide instantanée nécessite que le récipient dans lequel les légumes ont été déposés soit mis en contact rapidement avec un récipient tampon de volume relativement grand (par exemple 10 à 20 fois le volume dudit récipient contenant les légumes) dans lequel le vide a été préalablement réalisé.

Dans cette première étape, le vide réalisé est de l'ordre de grandeur du vide qui correspond à l'ébullition de l'eau contenue dans les légumes traités.

Dans la seconde étape, le vide sera complété pour être amené jusqu'à environ de 1 à 6 mbars. Comme dans cette étape, le dégazage du légume implique une certaine déshydratation de celui-ci et donc l'évacuation d'une quantité non négligeable de vapeur d'eau, il conviendra, industriellement, de réaliser le piégeage de ladite vapeur d'eau. Cela pourra être réalisé par tout moyen connu et notamment par passage des gaz de désorption sur des éléments convenablement refroidis.

Le vide limite visé en fin de dégazage est celui qui correspond au seuil de congélation de l'eau dans le légume.

On notera que cette évaporation d'eau qui se déroule durant la mise sous vide des légumes va refroidir notablement lesdits légumes.

Lorsqu'on a réalisé le dégazage poussé selon l'invention, le légume, par exemple le champignon, sera imprégné comme connu avec un liquide convenable. Il a été trouvé, et cela est très important pour que les opérations ultérieures notamment le blanchiment puissent être réalisées dans les meilleures conditions, que le liquide utilisé devait être également dégazé avant d'imprégner le légume.

On sait selon le brevet FR 2 512 643 que l'on procède tout d'abord à l'immersion sous vide du produit alimentaire dans le liquide d'imprégnation refroidi, qui contient un produit coagulant. De manière avantageuse, ce produit coagulant est par exemple du blanc d'oeuf. La concentration en produit coagulant est de 4 à 25 % environ en poids de matière sèche par rapport au liquide d'imprégnation, de préférence 6 à 12 %.

A la suite de cette immersion, on peut procéder soit à une imprégnation unique, soit à une imprégnation partielle, soit à des imprégnations multiples.

L'imprégnation unique est obtenue par une remontée unique de la pression jusqu'à la pression atmosphérique ou une pression supérieure (2 - 10 bars), ce qui favorise et augmente la rapidité de l'imprégnation notamment pour des légumes tels que les carottes et les salsifis.

On peut également procéder avantageusement à des imprégnations partielles ou multiples.

Pour cela, après avoir fait le vide dans l'enceinte contenant le produit alimentaire (dégazage du légume), on maintient ce vide poussé et on effectue l'immersion dans un premier liquide de traitement à forte concentration en coagulant, par exemple 10 à 25 % en poids de matière sèche. Le coagulant peut être du blanc d'oeuf.

On remonte ensuite la pression à une valeur intermédiaire, par exemple 500 mbars, ce qui provoque une première imprégnation par le liquide à forte concentration en coagulant. Sous cette pression intermédiaire, on évacue le liquide de traitement vers une enceinte réceptrice se trouvant sous la même pression. Il reste donc dans la première enceinte le produit alimentaire partiellement imprégné, qui n'est pas entouré de liquide de traitement, et qui se trouve toujours sous la pression intermédiaire, par exemple 500 mbars.

On admet alors un second liquide d'imprégnation dont la concentration en coagulant est de 0 à 4 % environ en poids de matière sèche. Il peut donc s'agir soit d'eau, soit d'une solution très peu concentrée en agent coagulant ; celui-ci peut d'ailleurs provenir du résidu du premier liquide d'imprégnation adhérant aux légumes.

On remonte ensuite la pression jusqu'à la pression atmosphérique ou à une pression supérieure, ce qui réalise la seconde imprégnation.

Pour les détails de mode opératoire et les différents produits utilisés, l'homme de métier pourra se référer sans difficulté à FR-A- 2 512 643.

La technique de préparation des légumes, selon l'invention, comprenant notamment une mise sous vide poussé au seuil et parfois au début de la congélation, et l'imprégnation par un ou plusieurs liquides parfaitement dégazés, apporte un gain de poids appréciable et une conservation des jus bénéfiques du légume dans la structure de celui-ci, et réduit les pertes lors des traitement thermiques ultérieurs du légume.

Le rendement gagne ainsi 3 à 10 points (c'est-à-dire gagne 3 à 10 % supplémentaires en valeur absolue) pour les racines : carottes, navets, salsifis, et jusqu'à 30 points pour des légumes très poreux comme les champignons.

Ceci est d'une importance économique considérable car l'amélioration porte sur une augmentation des rendements pondéraux d'un produit pratiquement fini.

A titre d'exemple, on sait que le champignon de Paris perd habituellement 35 % de son poids, après parage à sec, au cours des traitements thermiques de cuisson et blanchiment de 15 min à 95/100°C.

Le procédé selon l'invention permet d'obtenir, au terme des mêmes traitements, un poids de champignons qui reste identique au poids de champignons introduit.

Dans le cas particulier du champignon où la technique habituelle de dégazage sous vide à l'eau entraîne une absorption d'environ 60 % d'eau, totalement rejetée au cours de la cuisson, entraînant un lessivage des fractions solubles, néfaste quant à la qualité du produit fini, on a constaté que la technique de dégazage très poussé selon la présente invention (réalisé notamment par la mise sous vide poussé obtenue par paliers successifs de vide, le tout à la limite de congélation, en combinaison comme il sera dit ci-dessous avec un dégazage constant du liquide d'imprégnation) permettait pour la première fois de réduire fortement ce lessivage ; en outre on a constaté qu'une addition de 2 à 5 % de chlorure de sodium réduisait notablement le pourcentage absorbé et autorisait sur le plan qualitatif et nutritionnel la rétention dans le champignon du liquide absorbé surtout lorsque celui-ci représente un aliment.

Lorsque le liquide d'imprégnation est de l'eau, on a constaté qu'une addition de chlorure de sodium peut être effectuée avec avantage, à des doses variant entre 2 et 25 % en fonction du taux d'imprégnation. On réglera également l'addition de chlorure de sodium afin que le produit final soit correct au point de vue salinité. On a constaté que la présence de chlorure de sodium réduisait la quantité d'eau imprégnée, ce qui est particulièrement intéressant pour les produits très poreux, comme les champignons notamment. Cette réduction de l'eau absorbée améliore la qualité finale du produit grâce à une réduction du phénomène de lessivage et une augmentation du rendement en matières sèches. Ces avantages sont également vérifiés lorsque le liquide d'imprégnation représente un aliment. Dans ce cas, on a pu obtenir un poids final de légumes égal à la somme des poids du légume et du liquide d'imprégnation. Au contraire, dans l'état de la technique, on obtient un produit final dont le poids se situe au-dessous du poids initial du légume.

On a pu ainsi définir une technique consistant à imprégner le champignon par un liquide coagulable, mais à provoquer dans un premier temps une coagulation superficielle soit par voie chimique ou enzymatique, soit par une température élevée appliquée durant un temps court (10 s par exemple).

Après la formation d'une zone périphérique relativement étanche, on procède aux opérations de cuisson en élevant progressivement la température du champignon afin que les exsudats se mélangent au liquide d'imprégnation avant que celui-ci se coagule soit par la chaleur, soit par un effet chimique ou enzymatique; procédant de cette manière, l'ensemble des liquides internes formera une structure gélifiée comparable à la texture normale de la chair du champignon et autorisant la coupe en tranches sans écoulement de liquides supérieur à quelque (1 à 3) % en poids.

Les liquides d'imprégnation peuvent être très différents les uns des autres suivant le légume traité, et le but recherché :

1) Lorsque l'on cherche essentiellement à éviter les effets négatifs de la présence de gaz dans le légume, on utilisera l'eau seule comme liquide d'imprégnation.

On a constaté que, dans ce cas, il était intéressant d'adapter la minéralisation de l'eau ainsi que son pH au légume traité : une eau adoucie, ou déminéralisée, convient pour certains légumes comme les champignons, petits pois, haricots, lentilles et fèves, où on recherche la tendreté, alors qu'au contraire une eau dure conviendra pour les légumes dont on souhaite améliorer la fermeté : haricots verts, salades, choux, salsifis.

Lorsque l'on recherche une action antagoniste du calcium présent dans le légume, on effectue une addition de polyphosphates de soude dont le pH convient au pH finalement recherché, et cette addition donne des résultats intéressants, en particulier avec les légumes riches en protéines. Pour le champignon, conviennent en particulier les polyphosphates dont la teneur en $P_2O_5$ est supérieure à 60 %, utilisés à la dose de 2 à 30 g/l. Dans ces cas, il y aura lieu de choisir du sel purifié afin d'éviter un apport de calcium.

En ce qui concerne le pH, on réglera sa valeur à la valeur la plus faible compatible avec les impératifs de consommation, ce qui s'avère intéressant, car un tel pH favorise la conservation et facilite la stérilisation.

Que l'on recherche essentiellement un dégazage poussé, ou bien que l'on incorpore de plus des substances d'assaisonnement ou d'enrichissement, par la ou les imprégnation(s), il s'avère parfois intéressant de pouvoir réduire cette imprégnation pour les légumes qui présentent une grande porosité : on a découvert qu'une addition de chlorure de sodium dans des proportions de 1 à 25 % (afin d'obtenir une salinité correcte du produit final) permettait de réduire l'absorption dans des proportions notables : de 20 à 80 %. Ainsi pour le champignon, une addition de 2 à 5 % de chlorure de sodium dans l'eau réduit de 30 à 60 % la quantité d'eau ou de liquide d'imprégnation absorbé. Cette technique est d'un grand intérêt pour équilibrer le rapport entre le légume et le liquide d'imprégnation et réduire ou même supprimer le rejet en cours de blanchiment de l'eau ou du liquide d'imprégnation, ce rejet provoquant un "lessivage" préjudiciable.

Dans le cas particulier du champignon où la technique habituelle du dégazage sous vide à l'eau entraîne une absorption de plus de 60 % d'eau qui est totalement rejetée au cours de la cuisson, ce qui entraîne un lessivage des fractions solubles qui est néfaste quant à la qualité du produit fini, la réduction selon l'invention de l'absorption et du rejet en cours de cuisson rend possible l'utilisation d'épaississants qui seront choisis en fonction du légume et de l'aspect final : amidons, amidons modifiés, extraits d'algues, gommes, gélatines et dérivés du lait, pectines, alginates, dérivés de la cellulose.

L'équilibrage de la salinité et du pH à ce niveau de la fabrication facilite la suite des opérations au double plan de la qualité et du rendement : on évite en effet les effets néfastes de l'osmose entre le jus de couverture salé et un légume non salé; le légume perd une partie de son eau de constitution en faveur du jus; le pH abaissé peut permettre un barème de stérilisation réduit.

2) Lorsque, avec le dégazage, on recherche un assaisonnement, et outre le problème de la salinité et de l'acidité traité précédemment se pose à l'évidence le problème de l'ajustement et de la réduction du taux d'absorption. Il en est de même lorsque le liquide d'imprégnation est enrichi de substances telles que des protéines, des amidons, des sucres, des huiles.

On traitera ensemble les deux cas, car ils seront souvent confondus dans la pratique.

Deux cas sont à considérer :

a) le légume reste entier ou bien est coupé en gros morceaux à sa phase finale;

b) le légume est coupé en petits morceaux ou en lamelles à sa phase finale.

Parfois, certains légumes sont présentés sous les deux aspects, ce qui est le cas par exemple du champignon : entier, émincé, en morceaux.

a) Dans le cas où le légume reste entier, il est parfois possible d'accepter que le liquide d'imprégnation reste fluide à l'intérieur du légume, sa viscosité étant éventuellement ajustée comme on fait pour l'eau pure. Il faudra cependant réaliser une zone périphérique étanche pour faciliter les opérations de blanchiment et de conditionnement sans pertes de rendement.

Dans ces cas, on procédera à une "double imprégnation". Cette double imprégnation sera décrite dans ce qui suit.

b) dans le cas où le légume sera fractionné, il s'avérera nécessaire de gélifier la totalité des liquides absorbés. On pourra utiliser une variante de la technique de double imprégnation, ou bien une imprégnation unique. Le liquide d'imprégnation sera composé de telle manière qu'il soit susceptible de subir une coagulation soit par la chaleur, soit par coagulation chimique ou enzymatique.

On pourra provoquer une coagulation superficielle par la chaleur, ou par voie chimique ou enzymatique, immédiatement après l'imprégnation, ou bien réaliser une coagulation différée lorsque les jus du légume se seront mélangés au liquide d'imprégnation, en particulier après cuisson du légume. Parmi les produits permettant cette opération, on retiendra de préférence les alginates et les dérivés du lait.

On a découvert qu'il était parfois intéressant d'intégrer le dégazage et le blanchiment, en particulier lorsque l'on ne recherchait pas à imprégner le légume. Dans ce cas, lorsque le dégazage est terminé, on admet dans l'enceinte de la vapeur d'eau dont la température sera comprise entre +80 et +150°C en fonction du légume traité. Cette vapeur, exempte d'incondensables, se condensera sur et dans le légume, et on pourra, en contrôlant la pression dans l'enceinte, maintenir la température maximale possible du légume en tous points à la valeur souhaitée; cette température pourra être progressive jusqu'à la valeur qui sera la plus opportune, et, par augmentation de la pression dans l'enceinte, on pourra atteindre des valeurs élevées nécessaires à la stérilisation du produit ou à son pelage.

La remise sous vide permettra ensuite d'abaisser la température rapidement et à la valeur souhaitée, toujours par contrôle de la pression dans l'enceinte. Lorsqu'il s'agit d'un légume très poreux comme le champignon ou les salades, on réalise le blanchiment à coeur à +90°C avec une réduction de temps de près de 80 % par rapport à un blanchiment à l'eau. En utilisant le procédé selon l'invention, de 150 à 200 g de vapeur d'eau seront suffisants pour traiter 1 kg de légumes. Pour le champignon, on réalise le blanchiment sans imprégnation de liquide dès la fin du dégazage; lorsque l'on souhaite une imprégnation, on remet sous vide le légume imprégné après l'évacuation du liquide d'imprégnation et l'on injecte la vapeur d'eau lorsque l'on a atteint +90°C, ou bien on immerge dans de l'eau à +90°C et l'on amène à la pression atmosphérique ou à une pression supérieure. On évacue l'eau chaude sous pression et l'on admet de l'eau froide pour refroidir l'ensemble tout en maintenant sous pression. Cette manière de procéder permet d'intégrer dans un seul appareillage l'ensemble des opérations de dégazage, d'imprégnation, de blanchiment et de refroidissement, le tout sans manutentions du produit. La réduction de temps est notable et l'on gagne 2 à 4 points de rendement.

Il est possible de conditionner, selon un cas particulier, les champignons en fin de préparation par de l'huile, selon la méthode suivante :

- Après dégazage, on admet de l'huile chaude à +80/+100°C, très rapidement, dans l'imprégnateur, et l'on casse le vide pour éviter la vaporisation de l'eau de constitution du champignon. Dans cette huile, on a préalablement dispersé l'assaisonnement très finement moulu et déshydraté. La cuisson sera poursuivie par chauffage de l'huile.

Le produit ainsi obtenu a une meilleure présentation et l'on évite la succession des opérations classiques qui exposent le champignon et l'huile à l'air avec les inconvénients bien connus de telles manipulations.

Afin de répondre à l'évolution des habitudes alimentaires et abaisser le taux de lipides dans ces préparations, on peut réaliser cette opération avec une émulsion d'huile dans l'eau assaisonnée et additionnée d'un gélifiant, et l'on peut traiter suivant les techniques décrites les légumes entiers ou fractionnés.

L'invention sera mieux comprise à la lecture des exemples suivants.

1) Un seul liquide d'imprégnation

a) Coagulable par la chaleur

Le liquide d'imprégnation pourrait consister en un mélange de protéines et d'amidons natifs ou modifiés (de préférence amidon de riz) à l'état dispersé ou dissous dans de l'eau salée à 2 %.

Après imprégnation, on effectue un traitement thermique bref de 10 à 20 s à l'eau sous pression ou à la vapeur d'eau à 100-120°C ou dans un bain d'huile végétale ou de graisse alimentaire [ces deux derniers fluides seront préférés chaque fois qu'ils pourront être utilisés car il ne se produit pas de dilution du liquide d'imprégnation et par ailleurs ces fluides autorisent le choix d'une température supérieure] suivi d'un refroidissement rapide par aspersion d'eau qui provoque le gonflement de l'amidon et sa gélification dans la partie superficielle et la formation d'une étanchéité. La cuisson sera faite en reprenant une température de +60°C à +100°C pour atteindre +90°C à coeur progressivement en 10 à 15 min suivant la taille des champignons. Un refroidissement en dessous de +20°C effectué rapidement favorisera la formation d'un gel ferme.

b) Coagulation chimique

Le liquide d'imprégnation pourra comporter des protéines et/ou des amidons natifs ou modifiés précuits et salés à 2 %.

La gélification différée sera assurée par l'utilisation d'alginate de sodium à la dose de 1 à 2 %, la source de calcium nécessaire à la gélification sera du sulfate de calcium ou du phosphate dicalcique 0,2 à 0,4 %, le retardateur de gélification du métaphosphate de sodium à la dose de 0,4 %.

Après imprégnation, une coagulation superficielle est obtenue par trempage dans une solution de chlorure de calcium dosée de 5 à 20 % suivant le temps de trempage recherché.

Après la coagulation superficielle, la cuisson sera faite à l'eau à une température progressive de +60°C à +95°C pour atteindre +90°C à coeur, l'eau de cuisson sera additionnée de 0,5 à 1 % d'acide citrique.

Après cuisson et refroidissement, le jus de conservation convenablement salé sera acidifié par addition d'acide citrique, acétique, lactique, ascorbique et leurs mélanges, à raison de 0,5 à 1 %, pour obtenir les pH recherchés en fonction du mode de conservation retenu.

Nous avons obtenu des résultats particulièrement intéressants en utilisant comme acidifiant de l'acide chlorhydrique purifié: avec des doses très faibles on obtient les pH recherchés sans apparition des saveurs "acides" comme avec les acides organiques dont le dosage est dix fois supérieur. Nous pensons que l'utilisation de l'acide chlorhydrique présente des avantages technologiques notables pour les produits dont il serait souhaitable d'abaisser le pH au-dessous de 4,5 sans que le goût acide apparaisse défavorablement. Outre les champignons, d'autres légumes y gagneraient beaucoup (salsifis, endives, céleris, artichauts entre autres). On sait qu'il existe un problème d'autorisation d'emploi auprès des services compétents de chaque pays.

2) Deux liquides d'imprégnation

Dans cette technique, l'imprégnation profonde pourra être réalisée avec un liquide d'imprégnation ayant un but d'assaisonnement et/ou d'enrichissement en éléments nutritifs (épices, agents de sapidité, huiles, vinaigre, bouillons de cuisson de champignons, de légumes, etc.), éventuellement renforcé par des épaississants et/ou des gélifiants. Parmi ceux-ci, on peut citer la gomme xanthanne, les carraghénates, la gélatine, les dérivés du lait, les amidons. On utilisera en particulier la gomme xanthanne. (De manière plus générale, dans le cas de l'utilisation de l'eau pure comme liquide d'imprégnation, on a noté un effet favorable lorsque l'on augmente la viscosité de l'eau. A cet effet on utilise des gélatines, des dérivés du lait, des amidons natifs ou modifiés, des extraits d'algues y compris les alginates, des gommes naturelles et en particulier la gomme xanthanne. Ceci évite la perte ultérieure d'eau d'imprégnation.)

L'imprégnation superficielle aura comme fonction essentielle la retenue dans le produit des jus naturels et du liquide de première imprégnation. Cette imprégnation superficielle pourra être réalisée par un alginate qui sera gélifié comme indiqué plus haut (chlorure de calcium).

Cette seconde imprégnation superficielle sera faite selon les modes opératoires décrits pour le traitement à un seul liquide.

Une variante de cette méthode de double imprégnation consiste à doter le premier liquide de l'alginate, de la source de calcium et du retardateur, le second liquide d'imprégnation comportant en outre l'acide citrique et de l'acide ascorbique. La gélification se produira au bout de quelques minutes sans autre opération. Cette variante peut être avantageusement utilisée pour les champignons destinés à être surgelés crus, entiers ou coupés. La présence d'amidon et de sucres améliorera la stabilité de la gelée à à la congélation et à la décongélation.

Intérêt du procédé, la conservation du champignon est nettement améliorée, le brunissement habituel du champignon cru congelé évité.

Cette technique consiste donc à opérer une gélification superficielle à la surface du légume, de manière à empêcher la perte du liquide d'imprégnation lors de la cuisson.

Dans le cas d'opérations d'imprégnations multiples, on a rappelé ci-dessus que l'on doit remonter en pression par paliers.

On s'est aperçu qu'en partant du vide poussé la moindre remontée en pression provoquait en fait l'envahissement quasi total (90 %) de tous les canaux des légumes, alors que l'on souhaiterait par exemple faire une double imprégnation 50%/50%.

On a découvert selon l'invention que, pour bien contrôler la limite de la première imprégnation, il fallait remonter au préalable en pression à l'aide d'un gaz ne s'opposant pas lui-même à l'imprégnation.

On propose, après un dégazage profond du produit à la limite de la congélation, l'injection soit d'un gaz diffusant très facilement : l'hélium, soit d'un gaz ayant une bonne solubilité dans l'eau : le gaz carbonique, c'est-à-dire d'un gaz facilement éliminable.

La remontée préalable à une pression de 100 mbar permettra une imprégnation à environ 50 % en passant de 100 à 200 mbar. Puis, en passant de 200 mbar à 1 000 mbar, on réalise les autres 50 % des possibilités d'absorption.

Il apparaît avec cette méthode qu'il est possible de contrôler l'absorption; en effet, si, après une remontée à 400 mbar, le liquide d'imprégnation est évacué avant la remontée à 1 000 mbar, l'imprégnation sera limitée à environ 75 % des possibilités. Le gaz d'équilibrage pourra être évacué par diffusion si sa diffusion est aisée. Dans le cas du gaz carbonique, une cuisson sous pression évitera les effets dus à la dilatation provoquée par la chaleur, dilatation qui aurait comme conséquence l'expulsion d'une partie des jus internes.

Cette méthode consiste donc sous cet aspect à remplacer une remontée en pression par paliers à partir du vide poussé par une remontée selon le même principe, mais effectuée à partir d'une pression préalablement remontée à, par exemple, 100 mbar. On peut alors beaucoup mieux contrôler les imprégnations multiples car on contrôle beaucoup mieux la remontée en pression.

Un aspect indispensable de ce perfectionnement réside dans le choix du gaz pour la remontée préalable à, par exemple, 100 mbar. Il est impératif de choisir un gaz s'éliminant facilement afin qu'il ne s'oppose pas à l'imprégnation.

On trouvera ci-dessous la description de deux appareillages originaux permettant la mise en oeuvre du procédé décrit plus haut.

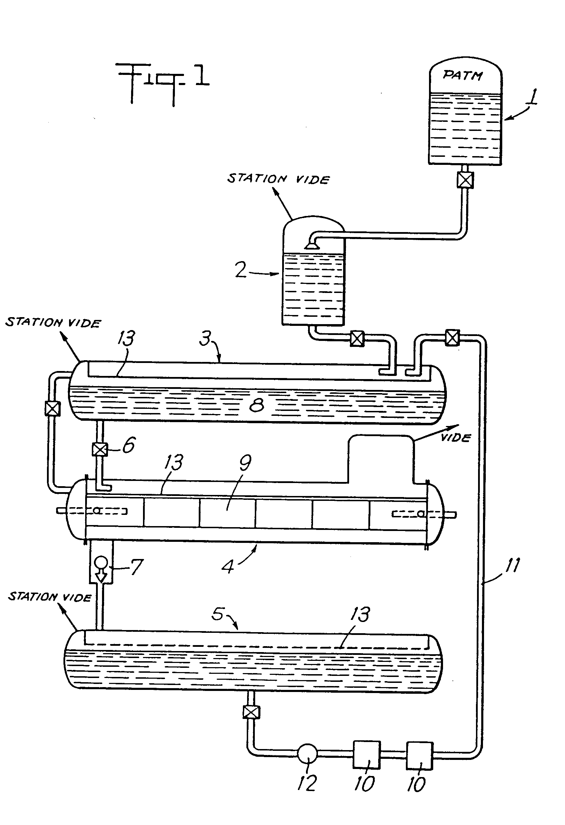

La figure 1 annexée représente un appareillage d'imprégnation selon l'invention, fonctionnant en discontinu;

la figure 2 annexée représente une variante selon l'invention de l'appareillage représenté sur la figure 1.

Les références ont les significations suivantes :

Figure 1 :

1. Réservoir de stockage du liquide d'imprégnation (p atm.).
2. Réservoir de stockage du liquide d'imprégnation sous vide.
3. Réservoir supérieur réfrigéré de stockage du liquide d'imprégnation.
4. Imprégnateur (réfrigéré).
5. Réservoir inférieur réfrigéré de stockage du liquide d'imprégnation.
6. Vanne.
7. Robinet à flotteur.
8. Liquide d'imprégnation.
9. Paniers contenant les légumes.

10. Filtres.

11. Conduit de recyclage du liquide d'imprégnation.

12. Pompe de recyclage.

13. Tôle de répartition pour écoulement du liquide en couche mince, favorisant la désaération.

A. Le fonctionnement de l'appareil en discontinu est le suivant :

1) Mise sous vide profond de l'imprégnateur chargé de légumes. On opère avec un ou plusieurs paliers de vide intermédiaires.

2) Admission par gravité du liquide d'imprégnation. Celui-ci a été réfrigéré en (3) et désaéré par l'action du vide. Cette désaération sous vide a été favorisée par la tôle (13).

3) On ferme la vanne (6) et on casse le vide dans l'imprégnateur (4).

4) Après imprégnation, on vidange le liquide par gravité et succion vers le réservoir (5) également réfrigéré, et qui est sous vide.

5) Recyclage du liquide tandis que l'on charge un nouveau lot de légumes.

6) Eventuellement, on apporte dans le circuit un complément de liquide d'imprégnation désaéré en provenance du réservoir (2).

Bien entendu, une configuration verticale des éléments de l'appareillage fonctionnant en discontinu serait équivalente.

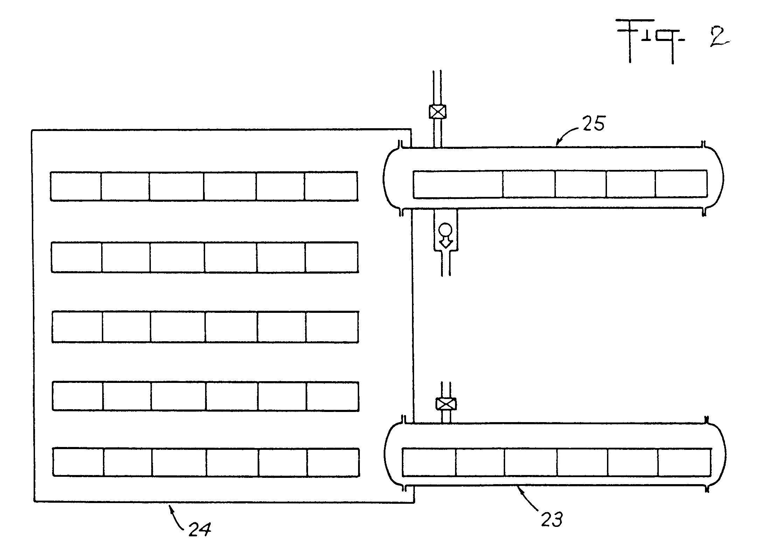

Selon une variante d'appareillage en discontinu représentée sur la figure 2 annexée, on dispose entre l'élément (23) servant de sas d'introduction et l'imprégnation (24) une cellule sous vide (25) où le légume est exposé au vide relativement longtemps. Ceci améliore la régularité de fonctionnement, l'efficacité et réduit fortement les pertes de temps au niveau de l'imprégnateur.

**Revendications**

1. Procédé de traitement de légumes, notamment de champignons dans lequel on réalise un dégazage par mise sous vide suivi d'une imprégnation par un liquide de traitement, caractérisé en ce qu'il comprend :

1) une mise sous vide d'une durée de l'ordre de la seconde jusqu'à un vide correspondant à l'ébullition de l'eau contenue dans les légumes, réalisée en mettant en communication l'enceinte dans laquelle les légumes ont été déposés avec un récipient tampon de volume correspondant à environ 10 à 20 fois le volume de ladite enceinte contenant les légumes et dans lequel un vide a été préalablement réalisé,

2) une mise sous un vide poussé de 1 à 6 mbars,

3) une imprégnation des légumes dégazés avec un liquide lui-même soumis à un dégazage préalable.

2. Procédé selon la revendication 1, caractérisé en ce que l'imprégnation 3) est réalisée en introduisant dans l'enceinte sous vide contenant les légumes dégazés le liquide d'imprégnation préalablement dégazé puis en remontant la pression à une pression supérieure ou égale à la pression atmosphérique.

**Claims**

1. Process for treating vegetables, notably mushrooms, in which a degassing is performed in vacuo, followed by an impregnation with a treating liquid, characterized in that said process comprises the steps of :

1) placing the vegetables in a vacuum for a period of about one second, until a vacuum is reached which corresponds to the boiling point of the water contained in the vegetables, this being achieved by placing the enclosure in which the vegetables have been placed in communication with a buffer container corresponding to about 10 to 20 times the volume of said enclosure containing the vegetables and in which a vacuum has been previously created,

2) placing the vegetables in a high vacuum of 1 to 6 mbars,

3) impregnating the degassed vegetables with a liquid which has also undergone a prior degassing.

2. Process according to claim 1, characterized in that the imrpegnation 3) is carried out by introducing into the enclosure under vacuum containing the degassed vegetables, the previously degassed impregnation liquid, then by increasing the pressure to a pressure equal to or higher than the atmospheric pressure.

**Patentansprüche**

1. Verfahren zur Behandlung von Gemüse, insbesondere von Pilzen, bei dem man eine Entgasung durch Anlegen von Vakuum und anschließend eine Imprägnierung mit einer Behandlungsflüssigkeit durchführt,

**gekennzeichnet durch**

folgende Merkmale:

1) Anlegen von Vakuum für eine Dauer in der Größenordnung von 1 s bis zu einem Unterdruck, der dem Siedepunkt des im Gemüse enthaltenen Wassers entspricht, in der Weise, daß der Behälter, in den das Gemüse eingebracht wurde, mit einem Druckpufferbehälter verbunden wird, der ein Volumen besitzt, das ungefähr dem 10- bis 20-fachen Volumen des das Gemüse enthaltenden Behälters entspricht, und in dem vorher ein Unterdruck erzeugt wurde,

2) Anlegen eines größeren Unterdrucks von 1 bis 6 mbar,

3) Imprägnierung des entgasten Gemüses mit einer Flüssigkeit, die ihrerseits zuvor entgast wurde.

2. Verfahren nach Anspruch 1, dadurch gekennzeichnet, daß die Imprägnierung 3) so durchgeführt wird, daß die zuvor entgaste Imprägnierungsflüssigkeit in den unter Vakuum stehenden Behälter, der das entgaste Gemüse enthält, eingebracht wird, wonach der Druck auf einen Druck über oder gleich dem Atmosphärendruck erhöht wird.

Fig. 1

Fig. 2

EP 0 140 767 B1